# EUROPEAN PATENT APPLICATION

(11) **EP 4 664 066 A1**
(43) Date of publication of application: **17.12.2025**
(21) Application number: 25181406.7
(22) Date of filing: 06.06.2025
(51) Int. Cl.: G01B 21/20, B25J 9/16, G01B 21/04

(54) **INSPECTION SYSTEMS AND ASSOCIATED METHODS FOR GAS TURBINE ENGINE COMPONENTS**

(30) Priority: 14.06.2024 US 202418743367
(71) Applicant: RTX Corporation, Farmington, CT 06032 (US)
(72) Inventor: GUO, Changsheng, Farmington, 06032 (US)
(74) Representative: Dehns

(57) **Abstract**

A system for inspecting a gas turbine engine component may include an inspection environment. The inspection environment may be operable to access feature information associated with a component design. The feature information may include a unique identifier assigned to a respective geometric feature of the component design. The inspection environment may be operable to query an inspection procedure repository for any subroutines assigned the unique identifier. The inspection environment may be operable to select a first subroutine from a result of the query in response to an occurrence of a match, but in response to non-occurrence of a match, select a second subroutine from the inspection procedure repository in response to the second subroutine meeting one or more criterion. The inspection environment may be operable to generate one or more instructions associated with the selected subroutine operable to control an inspection device to inspect a physical instance of the geometric feature. A method for inspecting a gas turbine engine component is also disclosed.

## Description

### BACKGROUND

This disclosure relates to inspecting gas turbine engine components.

Gas turbine engine components such as airfoils may include complex geometries. The component may be manufactured according to a computer-aided design (CAD) model. The as-manufactured component may be physically inspected to determine one or more dimensions, which may be compared to manufacturing tolerances, for determining whether the component passes inspection.

Various inspection devices may be used to perform the inspection, such as a coordinate measurement machine (CMM). CMM machines are known and may be programmed to measure the geometry of components by establishing discrete points on a physical surface of the component using a contact probe or other instrument. A position of the probe may be specified in terms of displacement from an origin point in a three-dimensional coordinate system (e.g., XYZ axes). The measured coordinate information for the physical surfaces of the component may be compared to the CAD model.

### SUMMARY

According to a first aspect, a system for inspecting a gas turbine engine component includes one or more processors coupled to memory. The one or more processors are collectively operable to execute an inspection environment. The inspection environment is operable to access feature information associated with a component design. The feature information includes a unique identifier assigned to a respective geometric feature of the component design. The inspection environment is operable to query an inspection procedure repository for any subroutines assigned the unique identifier. The inspection environment is operable to select a first subroutine from a result of the query in response to an occurrence of a match, but in response to non-occurrence of a match, select a second subroutine from the inspection procedure repository in response to the second subroutine meeting one or more criterion. The second subroutine is associated with a different unique identifier. The inspection environment is operable to generate one or more instructions associated with the selected subroutine operable to control an inspection device to inspect a physical instance of the geometric feature.

In any implementations, the inspection environment may be operable to adjust a parameter of the second subroutine based on the feature information. The inspection environment may be operable to generate the one or more instructions based on the adjusted parameter.

In any implementations, the inspection environment may be operable to generate a new subroutine for inspecting the geometric feature in response to determining that no subroutine in the inspection procedure repository includes a subroutine identifier matches the unique identifier or meets the one or more criterion. The inspection environment may be operable to assign the unique identifier to the new subroutine. The inspection environment may be operable to store the new subroutine in the inspection procedure repository.

In any implementations, the feature information may include at least one of the following a geometry of the geometric feature, a dimension of the geometric feature, and a tolerance associated with the geometric feature.

In any implementations, the inspection environment may be operable to determine whether the one or more criterion are met based on a comparison between the feature information of the geometric feature and feature information of a geometric feature associated with the second subroutine.

In any implementations, the inspection environment may be operable to access a plurality of manufacturing repositories including the inspection procedure repository. Entries in the manufacturing repositories may be associated with unique identifiers assigned to respective geometric features of one or more component designs to establish a set of digital threads linking the respective entries across the manufacturing repositories by the respective unique identifier.

In any implementations, the inspection environment may be operable to determine whether the one or more criterion are met in response to evaluating the entries in two or more of the manufacturing repositories associated with the same digital thread.

In any implementations, the inspection environment may include a machine learning model operable to determine whether the one or more criterion are met in response to evaluating one or more of the entries with respect to the geometric feature.

In any implementations, the inspection environment may be operable to determine that the first subroutine is a match in response to availability of an inspection device corresponding to the first subroutine, but determine that the first subroutine is not a match in response to non-availability of the respective inspection device.

In any implementations, the inspection device may be a coordinate measurement machine.

In any implementations, the component design may be associated with a gas turbine engine component.

According to a second aspect, a non-transitory computer-readable medium is provided having computer-executable instructions that, when executed by one or more processors, cause the one or more processors to collectively execute an inspection environment. The inspection environment is operable to access feature information associated with a component design. The feature information includes a unique identifier assigned to a respective geometric feature of the component design. The inspection environment is operable to query an inspection procedure repository for any subroutines assigned the unique identifier. The inspection environment is operable to select a first subroutine from a result of the query in response to an occurrence of a match, but in response to non-occurrence of a match, select a second subroutine from the inspection procedure repository in response to the second subroutine meeting one or more criterion. The second subroutine is associated with a different unique identifier. The inspection environment is operable to generate one or more instructions associated with the selected subroutine operable to control an inspection device to inspect a physical instance of the geometric feature.

In any implementations, the inspection environment may be operable to adjust a parameter of the second subroutine based on the feature information. The inspection environment may be operable to generate the one or more instructions based on the adjusted parameter. The inspection environment may be operable to generate a new subroutine for inspecting the geometric feature in response to determining that no subroutine in the inspection procedure repository includes a subroutine identifier matching the unique identifier and no subroutine in the inspection procedure repository meets the one or more criterion. The inspection environment may be operable to assign the unique identifier to the new subroutine. The inspection environment may be operable to store the new subroutine in the inspection procedure repository.

According to a third embodiment, a system for inspecting a gas turbine engine component includes one or more processors coupled to memory. The one or more processors are collectively operable to execute an inspection environment. The inspection environment is operable to access a component design including a geometric feature. The inspection environment is operable to query an inspection procedure repository including one or more subroutines. The inspection environment is operable to select a first subroutine from the inspection procedure repository in response to an occurrence of a match between the geometric feature of the component design and a geometric feature corresponding to the first subroutine, but in response to non-occurrence of a match, select a second subroutine from the inspection procedure repository in response to the second subroutine meeting one or more criterion. The one or more criterion is based on a similarity between the geometric feature of the component design and a geometric feature corresponding to the second subroutine. The inspection environment is operable to generate one or more instructions associated with the selected subroutine operable to control an inspection device to inspect a physical instance of the geometric feature.

In any implementations, the inspection device may be a coordinate measurement machine.

In any implementations, the component design may be associated with a gas turbine engine component.

According to a fourth aspect, a method for inspecting a gas turbine engine component includes accessing feature information associated with a component design including a geometric feature associated with a respective unique identifier. The method includes selecting an inspection subroutine. Selecting the inspection subroutine includes selecting a first subroutine from an inspection procedure repository as the inspection subroutine in response to determining that the first subroutine meets a first criterion, the first criterion including a unique identifier assigned to the first subroutine matching the unique identifier of the geometric feature, but selecting a second subroutine from the inspection procedure repository in response to determining that the second subroutine meets a second criterion but not the first criterion, then modifying an instance of the second subroutine based on one or more attributes of the geometric feature and setting the modified instance of the second subroutine as the inspection subroutine. The method includes programming an inspection device with one or more instructions associated with the inspection subroutine that, when executed, cause the inspection device to inspect a feature of a physical component corresponding to the geometric feature.

In any implementations, the one or more attributes of the geometric feature may include a dimension and/or a tolerance.

In any implementations, the second subroutine may be associated with a different unique identifier than the unique identifier assigned to the geometric feature. The step of determining that the second subroutine meets the second criterion may include determining an availability of the inspection device. The step of determining that the second subroutine meets the second criterion may include evaluating one or more entries in a plurality of manufacturing repositories for a degree of suitability in using the second subroutine to inspect the geometric feature using the inspection device. The one or more entries may be associated with the same unique identifier assigned to the second subroutine. The manufacturing repositories may include the inspection procedure repository. The modifying step may occur based on the degree of the suitability.

In any implementations, the method may include training a machine learning model based on information in the manufacturing repositories. The method may include using the trained machine learning model to perform the evaluating step.

In any implementations, the method may include generating a new subroutine for inspecting the geometric feature in response to determining that no subroutine in the inspection procedure repository meets the first criterion or the second criterion. The method may include selecting the new subroutine as the inspection subroutine. The method may include assigning the unique identifier to the new subroutine. The method may include storing the new subroutine in the inspection procedure repository.

In any implementations, the inspection device may be a coordinate measurement machine.

In any implementations, the component design may be associated with a gas turbine engine component.

Embodiments of the invention may include any one or more of the individual features disclosed above and/or below alone or in any combination thereof.

The various features and advantages of this disclosure will become apparent to those skilled in the art from the following detailed description, which is provided by way of example only. The non-limiting drawings that accompany the detailed description can be briefly described as follows.

### BRIEF DESCRIPTION OF THE DRAWINGS

Figure 1 discloses an inspection system.
Figure 2 discloses a perspective view of a gas turbine engine component.
Figure 3 discloses a method of inspecting a component.
Figure 4 discloses an implementation of evaluating an inspection subroutine for inspecting a component.
Figure 4A discloses an implementation of a component design associated with Figure 4.
Figure 4B discloses an implementation of a user interface of an inspection environment associated with Figure 4.

Like reference numbers and designations in the various drawings indicate like elements.

### DETAILED DESCRIPTION

CMM programming may be performed manually on a CMM machine. Significant amount of time may be required to develop and test a CMM program for a complex part. The developed CMM program may not be usable by another CMM machine or under a different CMM platform. The disclosed techniques may be utilized to automatically program a CMM inspection device.

The disclosed inspection systems and methods may be utilized to develop CMM programs automatically by using a feature level digital thread. CMM inspection subroutines may be associated with the feature to be inspected, such as the leading edge of an airfoil. The inspection system may be operable to extract and learn from the subroutines for the same and/or similar feature on a different part. The feature may be parameterized with parameters such as diameter, fillet radii, depth, etc., which may broaden the application of the developed subroutines and may improve learning from previously established CMM programs. The inspection system may be operable to automatically extract subroutines for use for similar features, across part numbers, and/or across part families.

A CMM machine may be programmed with subroutines to inspect individual features of a part, such as an edge, face, hole, etc. Universal unique identifiers (UUIDs) may be assigned to each of the geometric features of a component design. The UUID may be associated with various manufacturing and quality databases to establish a feature level digital thread. The part geometry from a virtual (e.g., CAD) model and associated product manufacturing information (PMI) may be exported to a quality information framework (QIF) format for programming the CMM machine with one or more subroutines to perform the inspection. CAD data may be converted into one or more QIF files. Database(s) of inspection subroutines may be queried for a match to the unique identifier, or close match including a subroutine that may be adapted to meet inspection requirements, and if not, then a new subroutine may be established and may be stored in the database with the respective UUID. The data may be queried using the UUID and/or digital thread.

When determining how to program the CMM, the inspection system may be operable to use the UUID to query a database of subroutines to determine if a subroutine already exists for inspecting the feature. If so, then CMM programming may be established using the subroutine. If not, the inspection system may be operable to determine if a similar subroutine exists that would meet the inspection requirements for the feature. Various techniques can be used, including evaluating geometry, dimensions, manufacturing, inspection tooling, etc. associated with the subroutines of other features in the database for a close match. If a close match exists, then it can be used or adapted to inspect the feature. The system may be operable to consider whether other (e.g., non-CMM) inspection means would be suitable for the feature (e.g., compare camera imagery to known standard). Otherwise, a new subroutine may be established to inspect the feature and may be stored in the database with the UUID.

The disclosed methods may include accessing a model based definition (MBD) including design features with UUIDs. The MBD may be converted to a QIF format for CMM program development. The QIF information may contain design features with the respective UUIDs. CMM programming may be performed with commercial CMM programming tools such as Calypso ^{™} or MODUS ^{™}. For any features or characteristics to be inspected with a CMM machine, an existing CMM database may be searched to determine whether a subroutine exists in the database for inspecting the feature. If a subroutine exists in the CMM database for inspecting the feature, the corresponding information relating to the inspection of this kind of features such as the probes used, the parameters, and/or CMM program may be obtained. One or more adjustments or modifications may be made to the CMM program for inspecting the part and associated feature(s). The adjustments may include changing a path of a measurement tool based on a difference in the geometry from the geometry associated with a previously established CMM program. If a subroutine does not exist in the CMM database for inspecting the feature, then a new program may be developed and may be associated with the respective UUID. The new program with the associated UUID may be stored in the CMM database for future use. If no suitable CMM program exists in the CMM database, another inspection means may be employed such as an image scanning technique. The method may be repeated for other features to be inspected.

The techniques disclosed herein may improve productivity, including relatively fast programming of a CMM machine. The disclosed techniques may provide more robust CMM programs by leveraging past knowledge embedded in developed subroutines and may reduce manufacturing cost.

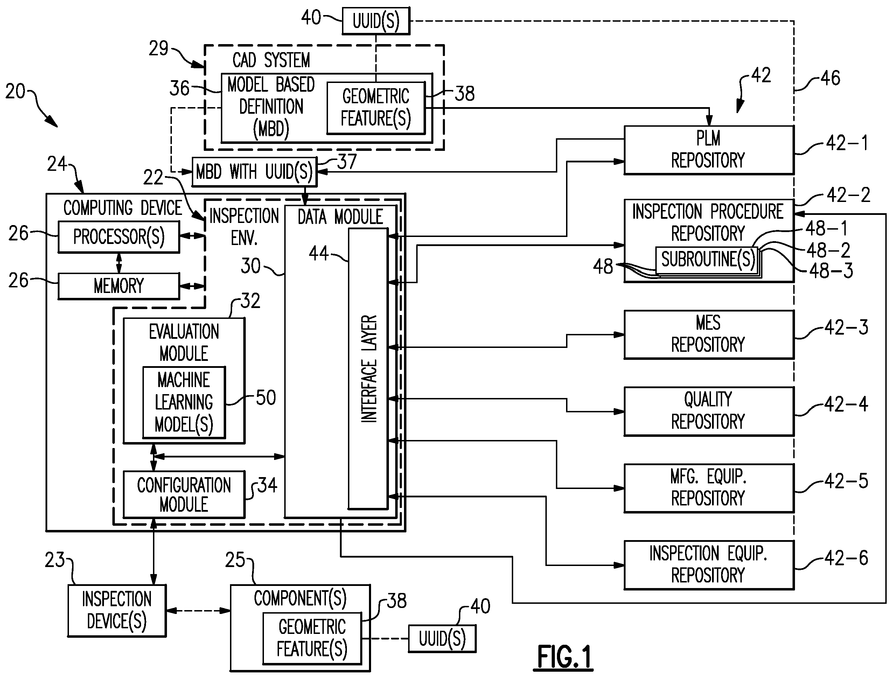

Figure 1 discloses an inspection system 20 according to an implementation. The inspection system 20 may be utilized to inspect various physical components, including one or more gas turbine engine components. The gas turbine engine components may include components of a propulsor, compressor, combustor and/or turbine, including airfoils and other parts having various geometries.

The system 20 may include an inspection environment 22. The inspection environment 22 may be operable to program or otherwise configure one or more inspection devices 23. The inspection device 23 may be operable to inspect one or more physical (e.g., manufactured) components 25. The inspection device 23 may including one or more probes for performing an inspection. Various inspection devices 23 may be utilized, including CMM machine. The system 20 may be operable to inspect the physical component 25 by comparing the physical geometry to the corresponding as-designed geometry and associated constraints (e.g., dimensions, tolerances, etc.).

The system 20 may include one or more computing device(s) 24 operable to execute the inspection environment 22. The computing device 24 may include one or more computer processors 26, memory 28, storage means, network devices, input and/or output devices, and/or interfaces. The processor(s) 26 may be coupled to the memory 28. The processor(s) 26 may be collectively operable to execute the inspection environment 22. The computing device 24 may be operable to execute one or more software programs, including one or more portions of the inspection environment 22. The computing device 24 may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing device 24 may be a desktop computer, laptop computer, smart phone, tablet, or any other computing device. Input devices may include a keyboard, mouse, touchscreen, etc. The output devices may include a monitor, speakers, printers, etc. The functionality of the inspection environment 22 and/or methods disclosed herein may be stored in a non-transitory computer-readable medium, including any of the memory devices disclosed herein. The non-transitory computer-readable medium may have computer-executable instructions that, when executed by the one or more processors 26, may cause the processor(s) 26 to collectively execute an inspection environment 22 to perform any of the functionality disclosed herein.

The inspection environment 22 may include one or more modules. In implementations, the inspection environment 22 may include a first (e.g., data or interface) module 30, a second (e.g., evaluation) module 32 and/or a third (e.g., configuration or programming) module 34. Although three modules are disclosed, the inspection environment 22 may include fewer or more than three modules and the functionality of the modules may be combined and/or separated to provide the disclosed functionality.

Each component 25 may be associated with a respective component design 36, which may be specified by a respective MBD. The component design 36 may be associated with any of the components disclosed herein, including a gas turbine engine component and/or assembly. The MBD 36 may include a three-dimensional computer aided design (CAD) model and associated product manufacturing information (PMI). The CAD model may be generated by a CAD system 29 (e.g., CATIA, AutoCAD, Solidworks, Siemens NX, etc.). The PMI may include various information including tolerances and other dimensional requirements, material requirements, etc. The component design 36 and/or component 25 may include one or more component (e.g., geometric) features 38. The CAD model may include a virtual representation of the component 25 and respective geometric features 38. The physical component 25 may be manufactured based on the geometry and any associated attributes specified by the component design 36. The geometric features 38 may have various characteristics, including one or more dimensions (e.g., height, diameter, etc.). In implementations, the characteristics may be assigned their own UUIDs 40.

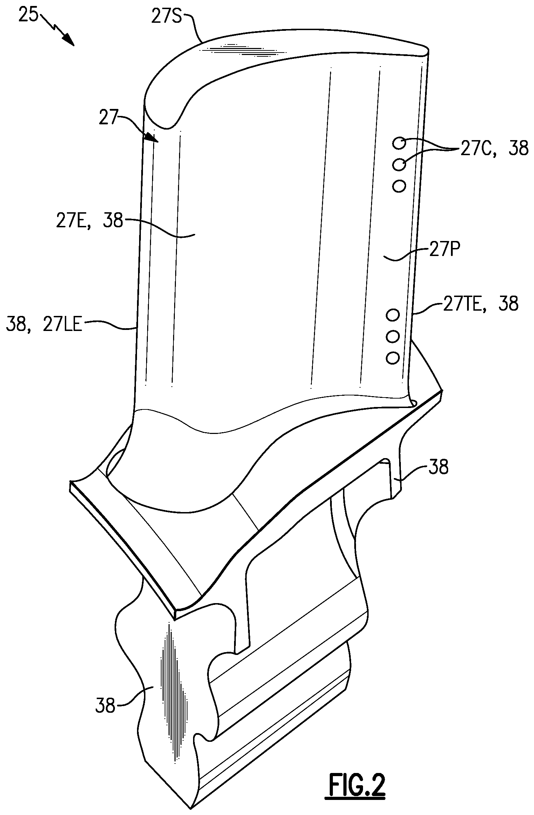

In the implementation of Figure 2, the component 25 may include an airfoil 27 having geometric features 38 such as an airfoil leading edge 27LE, pressure side 27P, suction side 27S, trailing edge 27TE, external surface contour 27E, cooling features (e.g., passages) 27C, etc. The disclosed techniques may be utilized to inspect other components of a gas turbine engine and/or components of other systems having various geometries.

Still referring to Figure 1, the data module 30 may be operable to interface with one or more systems and/or data sources, including one or more (e.g., manufacturing) repositories 42. The repositories 42 may contain all the Design, Manufacturing, and Inspection (DMI) data and may be linked to the geometric features 38 and/or associated characteristics of the MBD 36 for one or more components. The DMI data may be stored in various formats and may be stored in various databases and/or cloud-based storage, including Industry 4.0 (I04.0) compliant formats. The repositories 42 may include a product lifecycle management (PLM) repository 42-1, an inspection procedure repository 42-2, a manufacturing execution system (MES) repository 42-3, a quality repository 42-4, a manufacturing equipment repository 42-5 and/or an inspection equipment repository 42-6. Data and other information may be stored in the repositories 42 using various formats and data structures. In implementations, the repositories 42 may include one or more (e.g., relational) databases including one or more entries associated with information. The entries may store the information and/or may include link(s) to the information. The PLM repository 42-1 may include an overarching data store. The MES repository 42-3 may include information relating to fabrication of parts, including operation logs and instructions to manufacture the part. The manufacturing equipment (e.g., connected factory) repository 42-5 may include information relating to collected signals from manufacturing equipment, such as running temperature, which may be utilized to determine quality issues with parts. The configuration module 34 may be operable to select an inspection device 23 based on the operating (e.g., environmental) conditions of the associated manufacturing equipment. The inspection equipment repository 42-6 may include information associated with QIF resources. It should be understood that the data module 30 may be operable to interface with fewer or more than six repositories, and information associated with the repositories may be stored in one or more memory devices.

The inspection procedure repository 42-2 may be operable to store one or more inspection instructions (e.g., subroutines) 48. Each subroutine 48 may be assigned one or more UUIDs 40. In implementations, each subroutine 48 in the repository 42-2 may be assigned only one respective UUID 40. The inspection subroutine 48 may include one or more instructions operable to control an inspection device 23 to inspect a physical instance of one or more geometric feature(s) 38 of an associated component 25, which may be associated with the respective UUID(s) 40.

The data module 30 may include an interface layer 44. The interface layer 44 may be operable to access information stored in the repositories 42. The interface layer 44 and/or another portion of the data module 30 may be operable to access the repositories 42 including the inspection procedure repository 42-2. Entries in the repositories 42 may be associated with UUIDs 40 assigned to respective geometric features 38 of one or more component design(s) 36 to establish a set of digital threads 46 linking the respective MBD 36 and entries across the repositories 42 by the respective UUIDs 40. The digital thread 46 may be a logical connection of information associated with the same UUID 40 or may be a set of links to the information. The digital threads 46 may provide data traceability across the repositories and associated data sets, including the DMI data. The interface layer 44 and/or another portion of the data module 30 may be operable to read, write, edit, store and/or otherwise access information in the manufacturing repositories 42 based on UUID 40. One would understand how to program the interface layer 44 with logic to interface with the manufacturing repositories 42.

The interface layer 44 and/or another portion of the data module 30 may be operable to access feature information associated with the component design(s) 36. The feature information may include three-dimensional CAD geometry and/or PMI associated with the component design 36. The feature information may include various attributes including dimension(s) and/or tolerance(s) associated with the geometric feature(s) 38 of the component design 36. The feature information may include UUID(s) 40 assigned to the respective geometric feature(s) 38. In implementations, the feature information may include information stored in one or more of the repositories 42 associated with the respective UUID 40. Information in the repositories 42 may be stored in different formats. The interface layer 44 may be operable to access information in the repositories 42 using various techniques, such as knowledge graph(s) and/or ontology based data integration. An ontology may be utilized to crosswalk the data structures and linkages.

The CAD system 29 may be operable to store the component design 36 and associated UUIDs 40 in the PLM repository 42-1. The system 20 may be operable to convert the component design 36 from a CAD model or other MBD format to an inspection file 37, which may include the MBD and associated UUIDs 40. The inspection file 37 may be stored in the PLM repository 42-1. In implementations, the inspection file 37 may be stored in a quality information framework (QIF) format. The interface layer 44 and/or another portion of the data module 30 may be operable to access the inspection file 37.

The evaluation module 32 may be operable to determine whether any inspection subroutines 48 stored, or otherwise associated with an entry, in the inspection procedure repository 42-2 may be suitable for inspecting the geometric feature(s) 38 of the component 25 with an inspection device 23. The evaluation module 32 may be operable to cause the interface layer 44 to query the inspection procedure repository 42-2 for any subroutines assigned the UUID(s) 40 of the respective geometric feature(s) 38 of the component design 36.

The evaluation module 32 may be operable to select an inspection subroutine 48 from the inspection procedure repository 42-2 based on one or more (e.g., preselected) criterion, such as a match. In implementations, the evaluation module 32 may be operable to select a first (e.g., matching) subroutine 48-1 from a result of the query in response to an occurrence of a match, but in response to non-occurrence of a match, may be operable to select a second (e.g., alternate) subroutine 48-2 from the inspection procedure repository 42-2 in response to the second subroutine 48-2 meeting one or more (e.g., alternate) criterion. The second subroutine 48-2 may be associated with a different UUID 40 than the UUID 40 associated with the query (e.g., the geometric feature 38 to be inspected by an inspection device 23). The evaluation module 32 may be operable to evaluate at least one, more than one, and/or all inspection subroutines 48 in the inspection procedure repository 42-2 to determine whether any of the inspection subroutines 48 are a match or may otherwise meet the one or more criterion.

Other techniques may be utilized for selecting an inspection subroutine 48 from the inspection procedure repository 42-2. In implementations, the evaluation module 32 may be operable to use the UUIDs 40 and/or feature recognition (e.g., similarity to match) to compare a geometry of the geometric feature(s) 38 of the component design 36 and the geometric feature(s) associated with respective subroutines 48 to determine a match or near match. In implementations, the evaluation module 32 may be operable to select the (e.g., first) subroutine 48-1 from inspection procedure repository 42-2 in response to an occurrence of a match between the geometric feature(s) 38 of the component design 36 and geometric feature(s) corresponding to the first subroutine 48-1, but in response to non-occurrence of a match, may be operable to select another (e.g., second) subroutine 48-2 from the inspection procedure repository 42-2 in response to the second subroutine 48-2 meeting one or more criterion. The one or more criterion may be based on a similarity between the geometric feature(s) 38 of the component design 36 and the geometric feature(s) corresponding to the second subroutine 48-2. Various feature recognition techniques may be utilized, including a relative fit between a volume and/or one or more features (e.g., edges) of the geometry. In implementations, the criterion may include the relative fit exceeding a preselected threshold (e.g., greater than or equal to 95 percent).

The evaluation module 32 may utilize various techniques to determine whether the one or more alternate criterion are met. The evaluation module 32 may be operable to determine whether the one or more alternate criterion are met based on a comparison between the feature information of the geometric feature(s) 38 and feature information of geometric feature(s) 38 associated with the second subroutine 48-2, which may be the same or may differ. The evaluation module 32 may be operable to compare a relative fit between the geometric feature(s) 38 of the component design 36 to be inspected and another component design 36 associated with the second subroutine 48-2. The geometric feature 38 may be associated with one or more points, splines and/or volumes, which may be evaluated for relative fit. The evaluation module 32 may be operable to compare one or more dimensions of the geometric features 38, including a scaling between the features 38. The evaluation module 32 may be operable to compare a difference between the geometric features 38 to one or more thresholds (e.g., ±5 percent). The evaluation module 32 may be operable to compare tolerance(s) of the geometric feature 38 to be inspected to the tolerance(s) of the geometric feature 38 associated with the second subroutine 48-2 to determine whether the tolerance(s) of the geometric feature 38 associated with the second subroutine 48-2 are at least as stringent as the tolerance(s) of the geometric feature 38 to be inspected. The evaluation module 32 may be operable to determine whether the one or more alternate criterion are met in response to evaluating the entries in two or more of the repositories 42 associated with the same digital thread 46 and/or UUID 40. The evaluation module 32 may be operable to compare information associated with the digital threads 46 of the feature(s) 38 to be inspected and the feature(s) 38 associated with the second subroutine 48-2.

The criterion may include availability of inspection device(s) 23 associated with the respective inspection subroutines 48. The attributes of the geometric features 38 may be the same, but the geometric feature 38 associated with the subroutine 48 may be associated with an inspection device 23 that may be unavailable (e.g., currently being utilized to inspect another component, not a current asset, undergoing maintenance, etc.). The evaluation module 32 may be operable to determine that the subroutine 48 (e.g., 48-1 or 48-2) is a match or otherwise meets the criterion in response to availability of an inspection device 23 corresponding to the subroutine 48, but may be operable to determine that the subroutine 48 is not a match or otherwise meets the criterion in response to non-availability of the respective inspection device 23. The criterion may include an accuracy level of the inspection device 23 associated with the subroutine 48, which may be compared to the PMI information associated with the feature 38 to be inspected. In implementations, the criterion may require a minimum (e.g., relatively high) accuracy level for inspecting the feature 38.

The inspection environment 22 may include various artificial intelligence (AI) functionality for evaluating subroutines 48 for suitability in inspecting the feature(s) 38. The inspection environment 22 may include, or may otherwise interface with, one or more machine learning models 50. In implementations, the evaluation module 32 may include one or more machine learning model(s) 50. The machine learning model 50 may be operable to search and/or otherwise determine whether the one or more criterion are met in response to evaluating one or more of the entries in the repositories 42 with respect to the geometric feature(s) 38 and/or associated PMI. Various machine learning models may be utilized. In implementations, the machine learning model 50 may include a neural network. The machine learning model 50 may be associated with training data. The model 50 may be trained utilizing various supervised and/or unsupervised techniques based on the training data. The machine learning model 50, including a neural network, may be established based on training data including a supervised and/or unsupervised training set. The machine learning model 50 may be trained utilizing information in the repositories 42, including sets of information associated with the same UUIDs 40 and/or digital threads 46. Supervision may include indicating whether the machine learning model 50 correctly or incorrectly identifies a subroutine 48 suitable for inspecting the associated geometric feature(s) 38, which may be specified by the PMI and/or other information for manufacturing the component 25.

The evaluation module 32 may be operable to adjust parameter(s) of the second subroutine 48-2 to establish a modified instance of the second subroutine 48-2 based on the feature information, including any attributes associated with the geometric feature 38. The attributes may include a respective UUID 40, identifier (e.g., name), shapes, dimensions, tolerances, axes, coordinates, datums, materials, etc. The evaluation module 32 may be operable to adjust parameter(s) of the second subroutine 48-2 based on a comparison between the attributes associated with the geometric feature(s) 38 to be inspected and the geometric feature(s) 38 associated with the second subroutine 48-2, which may be assigned different UUIDs 40.

The evaluation module 32 may be operable to generate a new subroutine 48-3 for inspecting the geometric feature 38 in response to determining that no subroutine 48 in the inspection procedure repository 42-2 includes a subroutine identifier (e.g., UUID 40) that matches the UUID 40 of the geometric feature 38 or otherwise meets the one or more criterion. The evaluation module 32 may be operable to assign the UUID 40 of the geometric feature 38 to the new subroutine 48-3. The evaluation module 32 may be operable to cause the interface layer 44 to store the new subroutine 48-3 in the inspection procedure repository 42-2.

The configuration module 34 may be operable to generate one or more instructions associated with the selected inspection subroutine 48, which may be operable to control an inspection device 23 to inspect a physical instance of the geometric feature(s) 38 of the manufactured component 25. The configuration module 34 may be operable to generate the instruction(s) based on the adjusted parameter(s) of a modified instance of the second subroutine 48-2. The evaluation module 32 may be operable to cause the interface layer 44 to store the modified instance of the second subroutine 48-2 as a new subroutine 48-3 in the inspection procedure repository 42-2. The configuration module 34 may incorporate and/or may interface with various software packages for establishing a program or set of software instructions in a format suitable for programming the inspection device 23, such as Zeiss Calypso ^{™} or MODUS ^{™}.

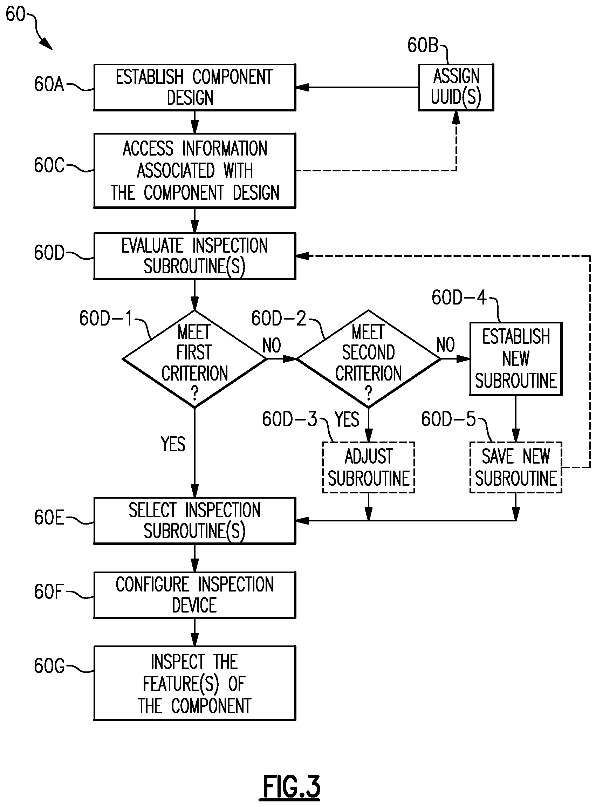

Figure 3 discloses a method in a flowchart 60 for inspecting a component according to an implementation. The method 60 may be utilized to inspect various physical (e.g., as-manufactured) components, including any of the gas turbine engine components and associated features disclosed herein, such as the component 25. Fewer or additional steps than are recited below could be performed within the scope of this disclosure, and the recited order of steps is not intended to limit this disclosure. The inspection environment 22 may be programmed with logic for performing the method 60. Reference is made to the component 25 and inspection system 20.

At block 60A, a component design 36 may be established. The component design 36 may include one or more geometric features 38. The component design 36 may be associated with a component, such as the gas turbine engine component 25. In implementations, the component design 36 may include a MBD and associated PMI. At block 60B, UUID(s) 40 may be assigned to, or may otherwise be associated with, the respective geometric feature(s) 38.

At block 60C, feature information associated with the component design 36 may be accessed. The feature information may include any attributes and/or other information associated with the geometric feature(s) 38.

At block 60D, one or more inspection subroutines 48 may be evaluated for suitability in inspecting the geometric feature(s) 38 of the component 25. The inspection subroutines 48 may be evaluated utilizing any of the techniques disclosed herein, including feature information (e.g., UUIDs) and/or feature recognition (e.g., similarity to match). Evaluating the inspection subroutine(s) 48 may include determining whether a (e.g., first) subroutine 48-1 meets a first (e.g., preselected) criterion or set of criterion at step 60D-1, which may include any of the criteria disclosed herein. The criterion may include a UUID 40 assigned to the first subroutine 48-1 matching the UUID 40 of the respective geometric feature 38. A match may indicate that the first subroutine 48-1 was established to inspect the same geometric feature 38 as incorporated in the component design 36.

Method 60 may include evaluating one or more other (e.g., alternate) subroutines 48 associated with the inspection procedure repository 42-2 at block 60D-2 in response to the first criterion or set of criterion not being met (e.g., no match) at block 60D-1. Block 60D-2 may include determining whether another (e.g., second) subroutine 48-2 in the inspection procedure repository 42-2 meets a second (e.g., preselected) criterion or set of criterion. The second criterion may include any of the criteria disclosed herein. The second subroutine 48-2 (and any associated geometric feature) may be associated with a different UUID 40 than the UUID 40 assigned to the geometric feature 38 to be inspected.

Block 60D-2 may include selecting the second subroutine 48-2 from the inspection procedure repository 42-2 in response to determining that the second subroutine 48-2 meets the second criterion (or set of criterion) but not the first criterion (or set of criterion). Step 60D-2 may include determining an availability of the inspection device 23 associated with the second subroutine 48-2. Step 60D-2 may include evaluating one or more entries (e.g., records or memory locations) in one or more repositories 42 for a degree of suitability in using the second subroutine 48-2 to inspect the geometric feature(s) 38 using the inspection device 23. The entries may be associated with the same UUID 40 assigned to the second subroutine 48-2 and/or digital thread 46. The manufacturing repositories 42 may include any of the repositories 42 disclosed herein, including the inspection procedure repository 42-2.

In implementations, method 60 may include training machine learning model(s) 50. Various techniques may be utilized to train the model 50, including any of the techniques disclosed herein. The machine learning model 50 may be trained based on training data, which may include supervised and/or unsupervised training set(s). The training set may include the component design 36 and/or associated PMI. The training set may include various characteristics and/or attributes, including any of those disclosed herein, such as geometry, dimensions, tolerances, etc., associated with a component design 36 and/or associated component 25. The machine learning model 50 may be trained based on information in the repositories 42. Block 60D-2 may include using the trained machine learning model(s) 50 to perform the evaluation of the subroutine(s) 48 at block 60D, including determining whether the second subroutine 48-2 meets the second criterion or set of criterion at block 60D-2.

At block 60D-3, an instance of the second subroutine 48-2 meeting the criterion at block 60D-2 may be modified (e.g., adjusted) based on one or more attributes of the geometric feature 38. The attributes may include any of the attributes disclosed herein, such as dimension(s) and/or tolerance(s). Modifying an instance of the second subroutine 48-2 may occur based on the degree of the suitability of the second subroutine 48-2 in inspecting the feature(s) 38 of the component 25. Various criteria may be utilized to set the degree of suitability. In implementations, a subroutine may be "suitable" if an inspection machine may be programmed with the subroutine, or a derivative thereof with less than or equal to 10 percent alteration to the original instructions including adjusting any parameters, to inspect the feature(s). In implementations, the machine learning model(s) 50 and/or another portion of the evaluation module 32 may learn parameters from the stored subroutine(s) 48 for establishing a modified instance of a respective subroutine 48 even if more than 10 percent alteration to the original instructions would be required. Block 60D-3 may include using the trained machine learning model(s) 50 to determine and/or cause any modifications to an instance of the second subroutine 48-2 for inspecting the feature(s) 38 of the component 25 with the associated inspection device 23. The machine learning model 50 may be trained utilizing any of the techniques disclosed herein.

At block 60D-4, a new subroutine 48-3 for inspecting the geometric feature(s) of the component 25 may be generated in response to determining that no subroutine 48 in the inspection procedure repository 42-2 meets the first criterion or set of criterion at block 60D-1 or the second criterion or set of criterion at block 60D-2. Block 60D-4 may include assigning the UUID 40 associated with the respective feature 38 to the new subroutine 48-3. At block 60D-5, the new subroutine 48-3 with the assigned UUID 40 may be stored in the inspection procedure repository 42-2. Method 60 may include evaluating the new subroutine 48-3 in a subsequent iteration of block 60D, which may reduce computing time for selecting and/or configuring an inspection device 23.

At block 60E, an inspection subroutine 48 for inspecting the feature(s) 38 of the component 25 may be selected. Block 60E may include selecting the first (e.g., matching) subroutine 48-1 from the inspection procedure repository 42-2 as the selected inspection subroutine 48 in response to determining that the first subroutine 48-1 meets the first criterion or set of criterion at block 60D-1. Block 60E may include selecting the second (e.g., alternate) subroutine 48-2 as the inspection subroutine 48 in response to the second criterion or set of criterion being met at block 60D-2. In implementations, block 60E may include setting a (e.g., modified) instance of the second subroutine 48-2 as the selected inspection subroutine 48 in response to the second criterion or set of criterion being met at block 60D-2 and/or the instance of the second subroutine 48-2 being modified at block 60D-3. Block 60E may include selecting the new subroutine 48-3 as the selected inspection subroutine 48, which may occur in response to neither the first nor the second criterion or set(s) of criterion being met by any subroutines 48 in the inspection procedure repository 42-2.

At block 60F, an inspection device 23 may be programmed or otherwise configured. The inspection device 23 may be any of the inspection devices disclosed herein, such as a CMM machine. Block 60F may include programming the inspection device 23 with one or more instructions associated with the inspection subroutine 48 that, when executed, cause the inspection device 23 to inspect feature(s) 38 of a physical component 25 corresponding to the geometric feature(s) 38 of the component design 36. Block 60F may include configuring the inspection device 23 with a routine including one or more inspection subroutines 48. The routine may be operable to cause the inspection device 23 to inspect different features 38 of the component design 36 using different subroutines 48. At block 60G, the configured inspection device 23 may inspect the feature(s) 38 of the component 25.

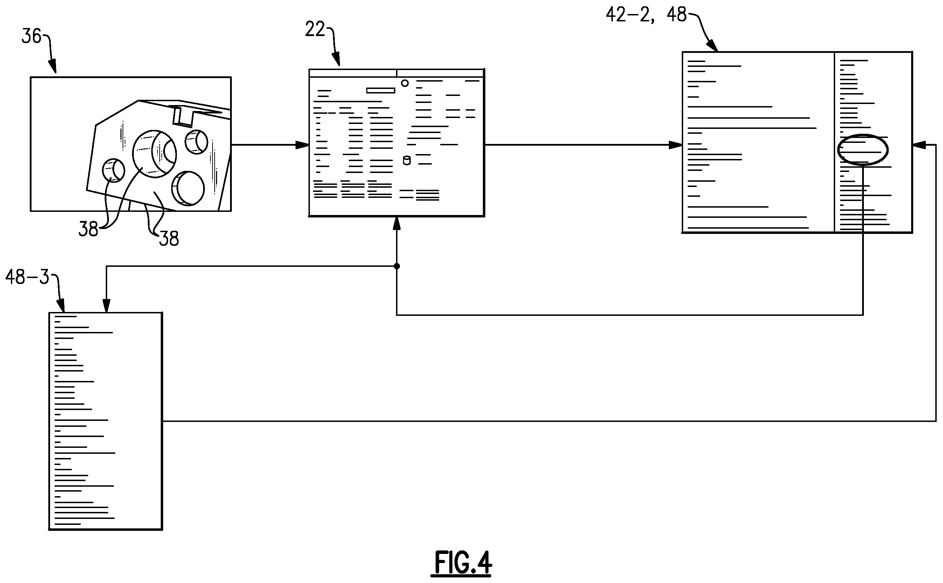

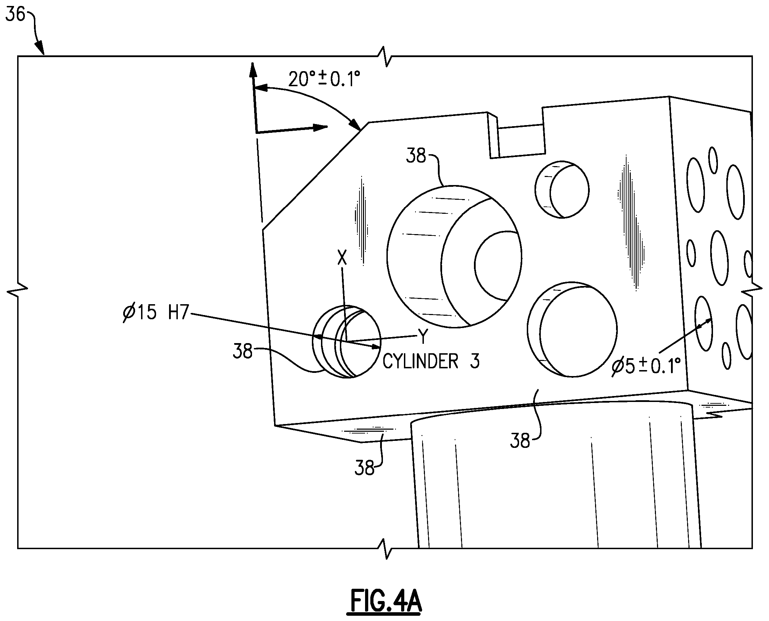

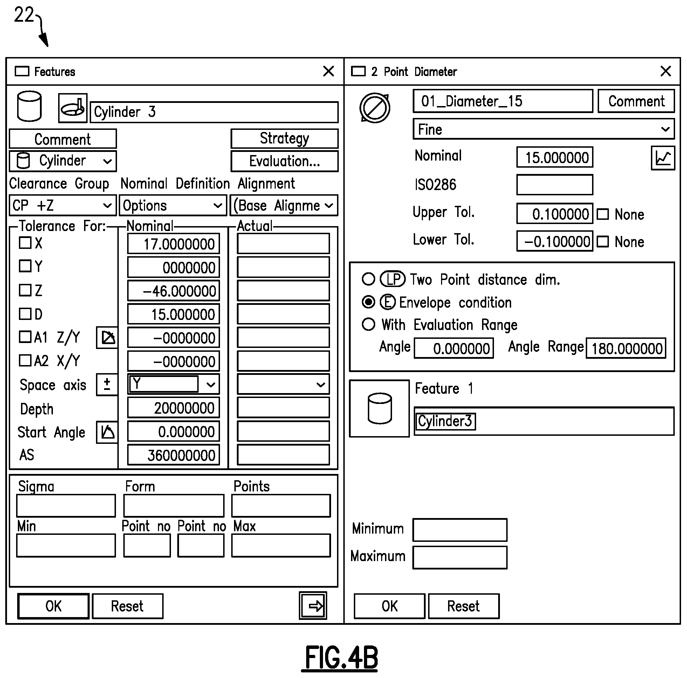

Figure 4 discloses an implementation of evaluating inspection subroutine(s) 48 for inspecting a physical (e.g., manufactured) instance of one or more geometric features 38 of a component design 36. Figure 4A discloses an implementation of the component design 36. The inspection environment 22 may be operable to evaluate inspection subroutine(s) 48 in the inspection procedure repository 42-2 for suitability in inspecting the geometric feature(s) 38. Figure 4B discloses an implementation of a user interface associated with the inspection environment 22. The inspection environment 22 may be operable to query the inspection procedure repository 42-2 using information associated with the geometric features 38, including the associated UUID 40 (Figure 1). The inspection environment 22 may be operable to obtain parameter(s) from an associated entry in the inspection procedure repository 42-2 for inspecting the feature(s) 38 with an instance of a selected inspection subroutine 48. The inspection environment 22 may be operable to generate a new inspection subroutine 48-3 in response to determining that the inspection procedure repository 42-2 does not include any inspection subroutines 48 that meet one or more (e.g., preselected) criterion, including any of the criteria disclosed herein. The inspection environment 22 may be operable to store the new inspection subroutine 48-3 in the inspection procedure repository 42-2 for a subsequent inspection. An inspection device 23 may be programmed or otherwise configured with a selected inspection subroutine 48, which may be modified, or a new inspection subroutine 48-3.

The disclosed systems and methods may be utilized to automate the inspection of various features of physical (e.g., as-manufactured) components. The disclosed techniques may reduce the cycle time for inspection and overall manufacturing time.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system for inspecting a gas turbine engine component comprising:
one or more processors coupled to memory, the one or more processors collectively operable to execute an inspection environment, and the inspection environment operable to:
access feature information associated with a component design, the feature information including a unique identifier assigned to a respective geometric feature of the component design;
query an inspection procedure repository for any subroutines assigned the unique identifier;
select a first subroutine from a result of the query in response to an occurrence of a match, but in response to non-occurrence of a match, select a second subroutine from the inspection procedure repository in response to the second subroutine meeting one or more criterion, the second subroutine associated with a different unique identifier; and
generate one or more instructions associated with the selected subroutine operable to control an inspection device to inspect a physical instance of the geometric feature.

2. The system as recited in claim 1, wherein the inspection environment is operable to:
adjust a parameter of the second subroutine based on the feature information; and
generate the one or more instructions based on the adjusted parameter; and/or wherein the inspection environment is operable to:
generate a new subroutine for inspecting the geometric feature in response to determining that no subroutine in the inspection procedure repository includes a subroutine identifier matches the unique identifier or meets the one or more criterion;
assign the unique identifier to the new subroutine; and
store the new subroutine in the inspection procedure repository.

3. The system as recited in claim 1 or 2, wherein the feature information includes at least one of the following: a geometry of the geometric feature, a dimension of the geometric feature, and a tolerance associated with the geometric feature; and/or wherein the inspection environment is operable to:
determine whether the one or more criterion are met based on a comparison between the feature information of the geometric feature and feature information of a geometric feature associated with the second subroutine.

4. The system as recited in any preceding claim, wherein the inspection environment is operable to:
access a plurality of manufacturing repositories including the inspection procedure repository, and entries in the manufacturing repositories are associated with unique identifiers assigned to respective geometric features of one or more component designs to establish a set of digital threads linking the respective entries across the manufacturing repositories by the respective unique identifier; and, optionally,
determine whether the one or more criterion are met in response to evaluating the entries in two or more of the manufacturing repositories associated with the same digital thread; and/or
wherein the inspection environment includes a machine learning model operable to determine whether the one or more criterion are met in response to evaluating one or more of the entries with respect to the geometric feature.

5. The system as recited in any preceding claim, wherein the inspection environment is operable to:
determine that the first subroutine is a match in response to availability of an inspection device corresponding to the first subroutine, but determine that the first subroutine is not a match in response to non-availability of the respective inspection device.

6. The system as recited in any preceding claim, wherein the inspection device is a coordinate measurement machine; and/or
wherein the component design is associated with a gas turbine engine component.

7. A non-transitory computer-readable medium having computer-executable instructions that, when executed by one or more processors, cause the one or more processors to collectively execute an inspection environment operable to:
access feature information associated with a component design, the feature information including a unique identifier assigned to a respective geometric feature of the component design;
query an inspection procedure repository for any subroutines assigned the unique identifier;
select a first subroutine from a result of the query in response to an occurrence of a match, but in response to non-occurrence of a match, select a second subroutine from the inspection procedure repository in response to the second subroutine meeting one or more criterion, the second subroutine associated with a different unique identifier; and
generate one or more instructions associated with the selected subroutine operable to control an inspection device to inspect a physical instance of the geometric feature.

8. The non-transitory computer-readable medium as recited in claim 7, wherein the inspection environment is operable to:
adjust a parameter of the second subroutine based on the feature information, and generate the one or more instructions based on the adjusted parameter; and
generate a new subroutine for inspecting the geometric feature in response to determining that no subroutine in the inspection procedure repository includes a subroutine identifier matching the unique identifier and no subroutine in the inspection procedure repository meets the one or more criterion, assign the unique identifier to the new subroutine, and store the new subroutine in the inspection procedure repository.

9. A system for inspecting a gas turbine engine component comprising:
one or more processors coupled to memory, the one or more processors collectively operable to execute an inspection environment, and the inspection environment operable to:
access a component design including a geometric feature;
query an inspection procedure repository including one or more subroutines;
select a first subroutine from the inspection procedure repository in response to an occurrence of a match between the geometric feature of the component design and a geometric feature corresponding to the first subroutine, but in response to non-occurrence of a match, select a second subroutine from the inspection procedure repository in response to the second subroutine meeting one or more criterion, the one or more criterion based on a similarity between the geometric feature of the component design and a geometric feature corresponding to the second subroutine; and
generate one or more instructions associated with the selected subroutine operable to control an inspection device to inspect a physical instance of the geometric feature.

10. The system as recited in claim 9, wherein the inspection device is a coordinate measurement machine; and/or wherein the component design is associated with a gas turbine engine component.

11. A method for inspecting a gas turbine engine component comprising:
accessing feature information associated with a component design including a geometric feature associated with a respective unique identifier;
selecting an inspection subroutine including:
selecting a first subroutine from an inspection procedure repository as the inspection subroutine in response to determining that the first subroutine meets a first criterion, the first criterion including a unique identifier assigned to the first subroutine matching the unique identifier of the geometric feature, but
selecting a second subroutine from the inspection procedure repository in response to determining that the second subroutine meets a second criterion but not the first criterion, then modifying an instance of the second subroutine based on one or more attributes of the geometric feature and setting the modified instance of the second subroutine as the inspection subroutine; and
programming an inspection device with one or more instructions associated with the inspection subroutine that, when executed, cause the inspection device to inspect a feature of a physical component corresponding to the geometric feature.

12. The method as recited in claim 11, wherein the one or more attributes of the geometric feature include a dimension and/or a tolerance.

13. The method as recited in claim 11 or 12, wherein:
the second subroutine is associated with a different unique identifier than the unique identifier assigned to the geometric feature; and
the step of determining that the second subroutine meets the second criterion comprises:
determining an availability of the inspection device; and
evaluating one or more entries in a plurality of manufacturing repositories for a degree of suitability in using the second subroutine to inspect the geometric feature using the inspection device, the one or more entries associated with the same unique identifier assigned to the second subroutine, the manufacturing repositories comprising the inspection procedure repository; and
the modifying step occurs based on the degree of the suitability; and, optionally, the method further comprising:
training a machine learning model based on information in the manufacturing repositories; and
using the trained machine learning model to perform the evaluating step.

14. The method as recited in any of claims 11 to 13, further comprising:
generating a new subroutine for inspecting the geometric feature in response to determining that no subroutine in the inspection procedure repository meets the first criterion or the second criterion;
selecting the new subroutine as the inspection subroutine;
assigning the unique identifier to the new subroutine; and
storing the new subroutine in the inspection procedure repository.

15. The method as recited in any of claims 11 to 14, wherein the inspection device is
a coordinate measurement machine; and/or
wherein the component design is associated with a gas turbine engine component.
